# EUROPÄISCHE PATENTSCHRIFT

(11) **EP 1 053 506 B1**
(45) Veröffentlichungstag und Bekanntmachung des Hinweises auf die Patenterteilung: **17.03.2004**
(21) Anmeldenummer: 97948898.8
(22) Anmeldetag: 06.11.1997
(51) Int. Cl.: G03B 42/04

(54) **VERFAHREN UND VORRICHTUNG ZUM VERARBEITEN EINER FOTOSTIMULIERBAREN BILDPLATTE**
METHOD AND DEVICE FOR PROCESSING A PHOTOSTIMULATABLE IMAGE PLATE
PROCEDE ET DISPOSITIF DE TRAITEMENT D'UNE PLAQUE IMAGE PHOTOSTIMULABLE

(30) Priorität: 12.11.1996 DE 19646606
(43) Veröffentlichungstag der Anmeldung: 22.11.2000
(73) Patentinhaber: Agfa-Gevaert Aktiengesellschaft, 51373 Leverkusen (DE)
(72) Erfinder: JÜRGEN, Müller, D-81545 München (DE); WALTER, Bauer, D-81739 München (DE)
(86) Internationale Anmeldenummer: PCT/EP1997/006177
(87) Internationale Veröffentlichungsnummer: WO 1998/021624

(56) Entgegenhaltungen:
- US-A- 3 888 587
- US-A- 4 455 671
- US-A- 4 908 514

## Beschreibung

Die Erfindung betrifft ein Verfahren und eine Vorrichtung zur Verarbeitung einer fotostimulierbaren Bildplatte nach dem Oberbegriff des Anspruchs 1 und 5.

In der medizinischen Röntgendiagnostik werden immer häufiger stimulierbare Phosphorfolien anstelle konventioneller Röntgenblattfilme verwendet, um Röntgenaufnahmen zu erstellen. Derartige Phosphorfolien haben als Bildinformationsträger gegenüber konventionellen fotografischen Röntgenfilmen den Vorteil einer nahezu linearen Wiedergabecharakteristik. Dies bedeutet, daß die auf dem Bildinformationsträger wiedergegebene Graustufe bzw. Dichte linear zur Röntgendosis verläuft, die auf den Bildinformationsträger gestrahlt wird. Die mit fotostimulierbaren Bildplatten erzielbare Bildqualität ist deshalb weitaus unempfindlicher gegenüber zu geringen bzw. zu hohen Dosisleistungen bei der Erzeugung des Röntgenbildes. Ein weiterer Vorteil derartiger fotostimulierbarer Bildplatten bzw. Phosphorfolien ist, daß sie wiederverwendbar sind. Sie können nach einer Röntgenaufnahme bzw. nach dem Auslesen der Bildinformation und dem Einspeichern in elektronische Medien getöscht und für weitere Röntgenaufnahmen wiederverwendet werden.

Vorteilhaft bei der Verwendung von Phosphorfolien ist weiter, daß sie hinsichtlich ihrer mechanischen Handhabung weitgehend den konventionellen Röntgenblattfilmen entsprechen. Bereits bestehende Einrichtungen zur Verarbeitung von Röntgenblattfilmen (wie z. B. Röntgenkassetten, Be- und Entladegeräte für Röntgenfilm etc.) sind deshalb weitgehend auch für Phosphorfolien verwendbar.

Ein Verfahren und eine Vorrichtung zur Handhabung derartiger, phosphorbeschichteter Folien ist z. B. aus der EP 307 760 B1 bekannt. Die Phosphorfolie wird dabei zunächst in eine Röntgenkassette geladen. Anschließend werden in einer Identifikationsstation aufnahmerelevante Daten wie Patientenname, Geburtsdatum, behandelnder Arzt etc. in einen der an der Kassette befindlichen Halbleiterspeicher geschrieben. Danach wird die Röntgenaufnahme erstellt, wobei die Röntgenbild-Information latent in der Speicherfolie gespeichert wird. Zum Erfassen der Röntgenbildaufnahme wird die Kassette in ein digitales Lesegerät eingeschoben. Dort wird die Kassette geöffnet, die Phosphorfolie entnommen und die Folie mit einer Abtastvorrichtung optisch stimuliert. Das dabei von der Phosphorfolie ausgesandte Licht wird von einer Lichtsammeleinrichtung aufgenommen und in gerasterte, digitale Bildsignale umgewandelt, wobei das Röntgenbild wiedergewonnen wird. Diese Bildsignale können dann einer digitalen Bildverarbeitungseinrichtung zugeführt und beliebig elektronisch weiterverarbeitet werden.

Nachteilig bei der oben beschriebenen Einrichtung ist, daß die Grundfläche des dabei verwendeten Geräts zum Auslesen der Bildplatte relativ groß ist, weil eine auszulesende Bildplatte entlang einer Richtung in das Gerät eingezogen wird, dort aus der Kassette entnommen und im wesentlichen in derselben Richtung zum fotoelektrischen Abtasten weitertransportiert wird. Andererseits besteht insbesondere in Krankenhäusern das Bedürfnis, Geräte mit möglichst kleinem Bedarf an Standfläche zur Verfügung zu stellen, weil aufgrund der Vielzahl technischer Einrichtungen ein gewisser Platzmangel herrscht.

Aus der DE 37 33 191 C2 und US 5,493,128 sind Geräte zur Verarbeitung fotostimulierbarer Phosphorfolien bekannt, die gegenüber der oben genannten Einrichtung eine geringere Aufstellfläche erlaubt, weil die Röntgenkassetten, in denen sich die Bildplatten befinden, im Zuge der Verarbeitung in einer vertikalen Orientierung transportiert werden. Sie werden dabei in einer ersten Richtung in das Gerät eingezogen, dann zu dieser Richtung verschoben, entladen und schließlich in einer anderen Richtung wieder ausgegeben. Die zu verarbeitenden bzw. bereits fertig verarbeiteten Kassetten werden besonders in der US 5,493,128 in relativ komplizierten Sortiermechanismen in geordneten Positionen gehalten.

Für die vorliegende Erfindung besteht die Aufgabe, ein Verfahren und ein Gerät zur Verarbeitung fotostimulierbarer Bildplatten anzugeben, bei dem eine möglichst geringe Standfläche bei möglichst einfachem Aufbau erreichbar ist.

Diese Aufgabe wird gelöst durch das im Anspruch 1 beschriebene Verfahren und durch die im Anspruch 5 beschriebene Vorrichtung. Vorteilhafte Ausführungen der Erfindung sind in den abhängigen Unteransprüchen beschrieben.

Erfindungsgemäß wird die Kassette, in der sich die Bildplatte befindet, während des Transportvorgangs um eine vertikale Achse gedreht. Hierdurch ist es möglich, daß die Kassette in einer ersten Stellung geöffnet, die Bildplatte entnommen und den Abtastkomponenten zugeführt wird. Während die Bildplatte fotoelektrisch abgetastet wird, wird die Kassette vorteilhaft in geöffnetem Zustand gedreht und nimmt die abgetastete Folie wieder auf. Die Kassette wird in einer horizontalen Lage transportiert. Eine vorteilhaftere Ausführungsform ermöglicht es, die Kassette in im wesentlichen vertikaler Orientierung zu transportieren. Das heißt, die Kassette steht während des Transportvorgangs auf ihrer schmalen Kante und ist in einem Winkel kleiner 45° gegen die Vertikale geneigt. Dadurch kann viel Platz in dem Verarbeitungsgerät eingespart werden. Die erfindungsgemäße Struktur der Verarbeitungsvorrichtung ermöglicht es, daß gleichzeitig zwei Kassetten in der Vorrichtung eingeführt sind. Während die eine Kassette in der Entladeposition steht, kann die zweite Kassette in der Beladestation stehen. Hierdurch wird auch ein wesentlich höherer Durchsatz gegenüber den Einrichtungen gemäß des Standes der Technik erreicht.

In einer vorteilhaften Ausführungsform wird die Kassette entlang einer ersten, horizontalen Richtung zur Plattenentnahmeposition transportiert, dort geöffnet und anschließend die Bildplatte aus der Kassette entnommen. Die Kassette wird dann um eine vertikale Achse um einen Winkel von 180° in die Platteneingabeposition gedreht. Dort wird die fotoelektrisch abgetastete Bildplatte in die Kassette zurückbefördert und anschließend die Kassette geschlossen. Schließlich wird die Kassette entgegengesetzt zur ersten Richtung in die Ausgabestation transportiert, wo sie zu einem beliebigen Zeitpunkt entnommen wird.

Eingabestation und Ausgabestation sind vorzugsweise als Puffer ausgebildet, so daß in beiden Stationen jeweils mehrere Kassetten aufgenommen werden können. Dies ermöglicht zum einen, daß eingangsseitig eine ständige Auslastung der Auslesevorrichtung sichergestellt sein kann, andererseits, daß ausgabeseitig die Entnahme bereits verarbeiteter Bildplatten bzw. Kassetten zeitverzögert folgen kann, ohne die Verarbeitungsleistung des Gesamtgerätes zu beeinträchtigen.

Besonders vorteilhaft ist es, das Gesamtgerät von einer Richtung zu bedienen, wobei die erste Transportrichtung der Kassette bzw. die Rücktransportrichtung von der Übergabestation zur Ausgabestation parallel zur Bedienungsrichtung verläuft.

Eingangs- und/oder ausgangsseitig können jeweils mehrere Stationen vorgesehen sein, so daß die Kassetten sortiert ein- bzw. ausgegeben werden können.

Die Wirkungsweise der Erfindung und ihre Vorteile werden nachfolgend anhand einiger Ausführungsbeispiele und Figuren näher erläutert. Jeweils gleichartige Komponenten sind dabei mit jeweils gleichen Bezugszeichen versehen.

Es zeigen:
- Fig. 1: eine schematische, dem Stand der Technik entsprechende Anordnung zur Verarbeitung von fotostimulierbaren Bildplatten,
- Fig. 2: eine Ausführungsform für ein erfindungsgemäßes Verarbeitungsgerät,
- Fig. 3: eine Schnittzeichnung der in Fig. 2 dargestellten Vorrichtung,
- Fig. 4: Details einer Bildplatten-Entnahmeeinrichtung innerhalb des Geräts von Fig. 2 und
- Fig. 5: eine zweite, erfindungsgemäße Variante für ein Bildplatten-Verarbeitungsgerät.

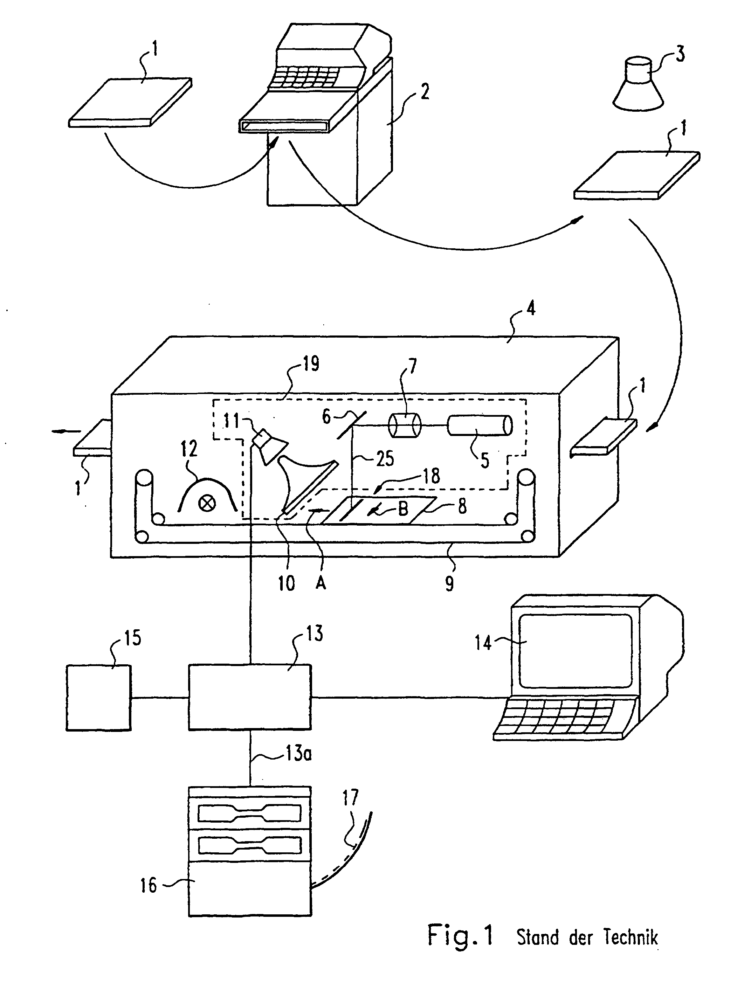

In Fig. 1 sind wesentliche Komponenten für ein digitales Radiografie-Verfahren, wie es in den eingangs genannten Veröffentlichungen bekannt ist, dargestellt. Die hier dargestellten Komponenten werden auch bei der vorliegenden Erfindung weitgehend verwendet. Eine Röntgenkassette 1 ist mit einer stimulierbaren Bildplatte, insbesondere mit einer Phosphorfolie, beladen. Sie wird in eine Identifikationsstation 2 eingeführt, in der aufnahmerelevante Daten in einen in der Kassette befindlichen Halbleiterspeicher geschrieben werden. Über eine Eingabekonsole sind verschiedene Daten wie Patientenname, Aufnahmebereich, behandelnder Arzt etc., eingebbar. Dabei kann vorgesehen werden, eine digitale Patientendatenkarte zu lesen und die Daten direkt an den Halbleiterspeicher der Kassette zu übertragen. Außerdem können aus bestimmten Auswahl-Menüs gewünschte Auswerteparameter für die Phosphorfolie festgelegt werden. Nach der Identifizierung der Kassette wird die Röntgenaufnahme unter einer Röntgenröhre 3 erstellt. Die Phosphorfolie trägt das Röntgenbild als latentes Bild. Zum Auslesen dieses latenten Bildes wird die Röntgenkassette 1 in ein Verarbeitungsgerät 4 für die Bildplatte 8 eingegeben. Dort öffnet eine nicht näher gezeigte mechanische Einrichtung die Röntgenkassette 1 und entnimmt die Phosphorfolie 8.

Über eine Transporteinrichtung 9 wird die Phosphorfolie 8 dann einer Lesestation 18 zugeführt. Die Lesestation 18 umfaßt eine Ausleseeinrichtung 19, die eine Reihe optischer, mechanischer und elektronischer Komponenten beinhaltet, z. B. einen Laser 5, einen beweglichen Spiegel 6, ein Objektiv 7, eine Lichtleiter-Anordnung 10 sowie einen Photomultiplier 11. Der Laser 5 sendet einen Lichtstrahl 25 aus, mit dem die stimulierbare Phosphorfolie 8 anregbar ist. Die Wellenlänge des Lichtstrahls 25 kann im infraroten, roten oder grünen Wellenlängenbereich liegen, je nachdem, weicher Phosphorfolientyp vorliegt. Das Licht wird über das Objektiv 7 auf die Phosphorfolie 8 fokussiert. Der bewegliche Spiegel 6 (Schwingspiegel oder rotierender Polygonspiegel) richten die Laserstrahlung in Richtung B punkt- und zeilenweise auf die Phosphorfolie 8.

In den Bereichen, in denen das latente Röntgenbild auf der Folie 8 ist, wird Stimulationslicht von der Phosphorfolie 8 ausgesandt. Dieses Licht wird von den Lichtleitern 10 gesammelt und an den Photomultiplier 11 abgegeben, der die Signale verstärkt. Anschließend werden die Signale digitalisiert und an einen Computer 13 mit Bildspeicher weitergeleitet. Die Signale können nach an sich bekannten Verfahren zusätzlich Filterstufen wie einen Antialiasing-Filter durchlaufen und/oder elektronisch komprimiert werden. Während des Auslesens wird die Phosphorfolie 8 von einem Transportband 9 in einer Slowscan-Richtung A transportiert.

Nach dem Abtasten der Phosphorfolie 8 wird diese durch eine Löscheinrichtung 12 gelöscht. Anschließend wird die Röntgenkassette 1 wieder mit derselben Phosphorfolie 8 beladen und steht für die nächste Röntgenaufnahme zur Verfügung.

Vom Computer 13 ist das digitalisierte Bild in einem Digitalspeicher 15 speicherbar, an einem Diagnosebildschirm 14 auswertbar oder über eine digitale Schnittstelle 13a an ein Hardcopy-Gerät 16 ausgebbar, das das Bild als Ausdruck auf fotografischem Film 17 wiedergibt. Über die Schnittstelle 13a sind die Bilddaten auch an beliebige andere digitale Bildsysteme weiterleitbar.

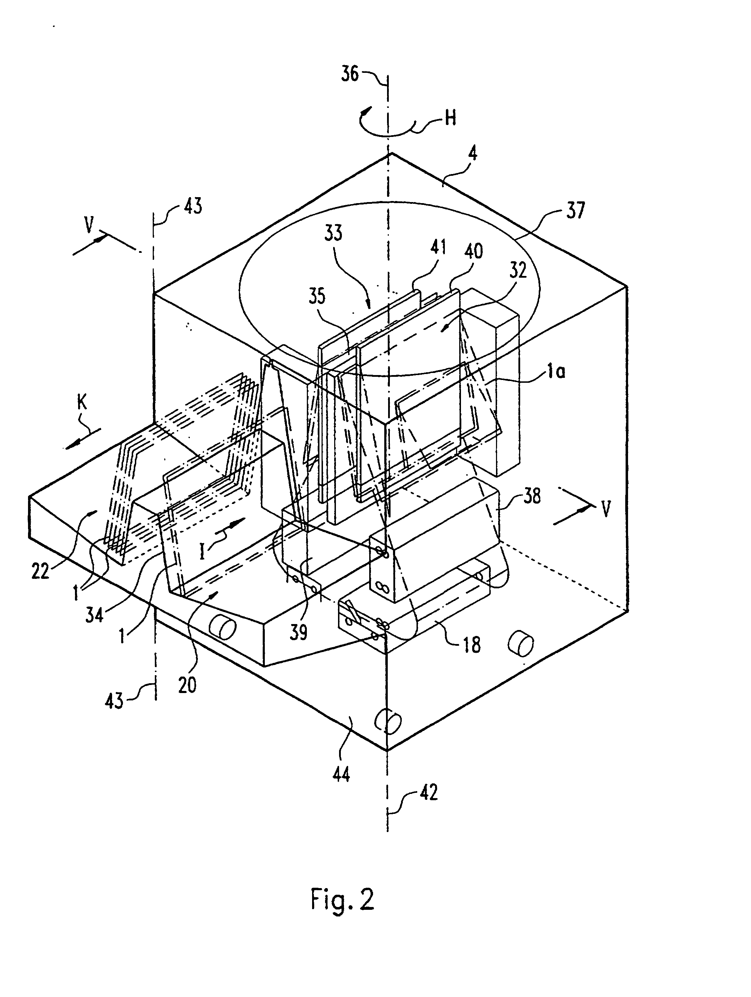

Fig. 2 zeigt ein Ausführungsbeispiel für ein Verarbeitungsgerät 4 für fotostimulierbare Bildplatten. Dieses Ausführungsbeispiel weist eine Kassetten-Eingabestation 20, eine Kassetten-Übergabestation 35 sowie eine Kassetten-Ausgabestation 22 auf. Die Eingabestation 20 und die Ausgabestation 22 sind als Speicher ausgebildet, so daß sie jeweils bis zu 20 Kassetten 1 aufnehmen können. Die Kassetten 1, welche eine ebenes Bodenteil, ein daran mittels Scharnieren angebrachtes ebenes Deckelteil sowie mehrere Seitenteile aufweisen, stehen dabei mit einem ihrer schmalen Seitenteile in einer im wesentlichen vertikalen Orientierung in den beiden Stationen 20 und 22. Sie sind um höchstens 20°, vorzugsweise um 10° relativ zur vertikalen Achse 36 geneigt. Eingabestation 20 und Ausgabestation 22 sind bezüglich einer Ebene, die parallel zur Einzugsrichtung I verläuft, im wesentlichen spiegelbildlich angeordnet. Beide Stationen 20 und 22 sind an einem gemeinsamen Gehäuseteil 44 des Verarbeitungsgeräts 4 schwenkbar gelagert. Die Eingangsstation 20 ist dabei um eine Achse 42, die mit einer seitlichen Kante des Verarbeitungsgeräts 4 zusammenfällt, aufklappbar. Die Ausgabestation 22 ist um eine entsprechende, entlang der gegenüberliegenden Gehäusekante verlaufenden Achse 43 schwenkbar. Dadurch ist das Geräteinnere für Service- und Reparaturzwecke gut zugänglich. Eine im Geräteinneren festsitzende Folie kann dadurch relativ einfach entnommen werden.

Von der Eingabestation 20 wird die an der Wand 34 anliegende Kassette 1 durch einen Transportmechanismus in Richtung I in das Geräteinnere zur Übergabestation 35 transportiert. Dort wird eine zu entladende Kassette 40 geöffnet, d. h. ihr Kassettendeckel 1a nach oben geschwenkt und eine in der Kassette 40 enthaltene Bildplatte vom Entnahmemechanismus 38 entnommen. Anschließend wird die Bildplatte der Ausleseeinheit 18 zugeführt und dort hochpräzise entlang der Slowscan-Richtung A ausgelesen. Die Ausleseeinrichtung erfaßt die in der Platte gespeicherten Bildinformationen. Die in der Bildplatte enthaltene Restbildinformation wird nach dem Erfassen der Bildinformation mit einer Löschlampe vollständig gelöscht. Dann wird die Bildplatte in entgegengesetzter Richtung zurück zur Kassette 40 transportiert und auf einer der Entnahmeseite der Entladestation 35 gegenüberliegenden Beladeposition wieder in dieselbe Kassette 40 eingeführt. Dazu wird die Übergabestation 35 um die Achse 36 in Richtung H um 180° gedreht. Die Übergabestation 35 ist um einen Kreis 37 um bis zu 360° rotierbar gelagert. Sie ist - ähnlich wie die Ein- und Ausgabestationen 20 und 22 - spiegelbildlich aufgebaut, wobei die Spiegelebene im wesentlichen die gleiche ist. Die Übergabestation 35 weist somit zwei Seiten 32 und 33 auf. In beiden Seiten kann gleichzeitig jeweils eine Kassette eingeführt, d. h. verarbeitet werden. Es kann also gleichzeitig eine Kassette entladen werden, während eine andere Kassette 41 gerade beladen wird. Hierdurch wird die Zykluszeit des Gesamtgeräts 4 wesentlich verkürzt. Weiterhin vorteilhaft ist, daß mit ein und demselben Gerät 4 verschiedene Kassettenformate verarbeitet werden können. In der in Fig. 2 gezeigten Einheit 32 der Übergabestation 35 sind mit gestrichelten Linien verschiedene Kassettenformate angedeutet.

Das Wiederbefüllen einer Kassette in der ausgabeseitigen Position der Übergabestation 35 erfolgt durch eine Eingabeeinheit 39. Wegen der spiegelbildlichen Gesamtkonzeption des Geräts kann diese Eingabeeinheit 39 weitgehend identische Komponenten zur Entladeeinheit 38 haben. Dieser Aufbau vereinfacht die Herstellung des Geräts wesentlich.

Nach Wiederbefüllen der Kassette 41 wird diese in die Ausgabestation 22 entlang der Richtung K transportiert. Fertig verarbeitete Kassetten werden dabei der Reihe nach abgelegt und in der Ausgabestation gespeichert. Wegen der Speicherfähigkeit der Eingabestation und der Ausgabestation 20 bzw. 22 ist ein weitgehend automatischer Betrieb möglich, wobei eine weitgehende Auslastung des Geräts ohne Systempausen erfolgen kann.

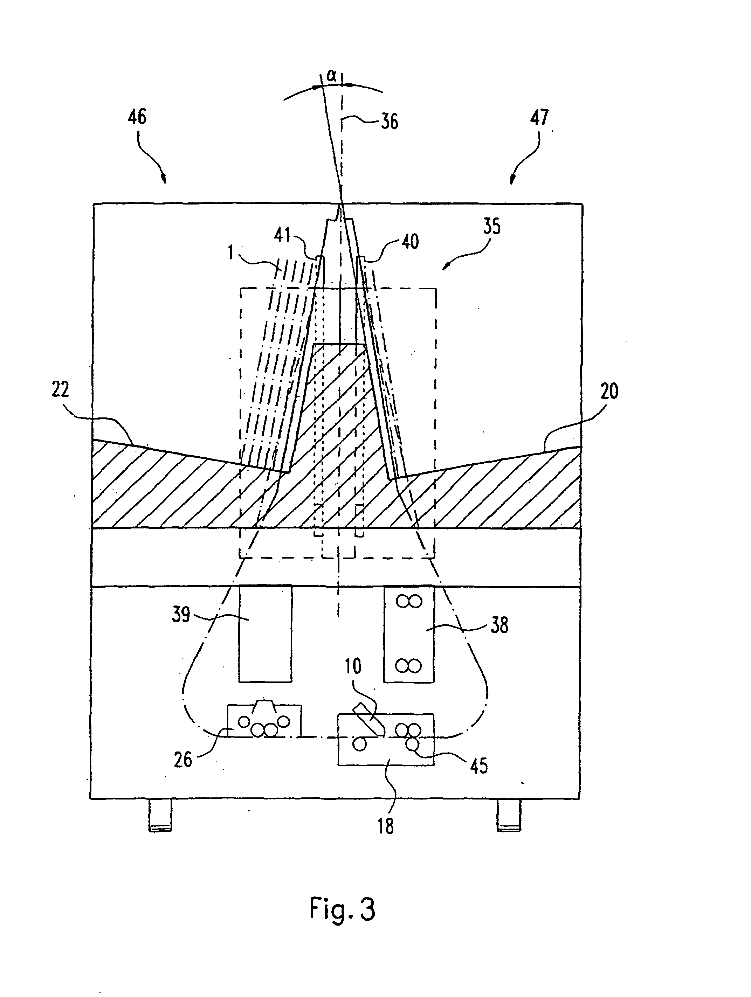

Fig. 3 zeigt ein Schnittbild des in Fig. 2 dargestellten Geräts entlang der Linie V-V, wobei die wesentlichen Bestandteile der Eingabe- und Ausgabestationen 20 bzw. 22 sowie dort gespeicherte, im wesentlichen vertikal orientierte Kassetten 1 schematisch angedeutet sind. Achse 36 teilt das Gesamtgerät in die im wesentlichen spiegelbildlich angeordnete eingangsseitige Gerätehälfte 47 und ausgangsseitige Gerätehälfte 46 ein. Von der Lesestation 18 sind die Lichtleitereinheit 10 und eine Transportwalzeneinheit 45 dargestellt. Der relativ kleine Neigungswinkel α, welchen die Kassetten zur vertikalen Achse 36 einnehmen, beträgt etwa 10°.

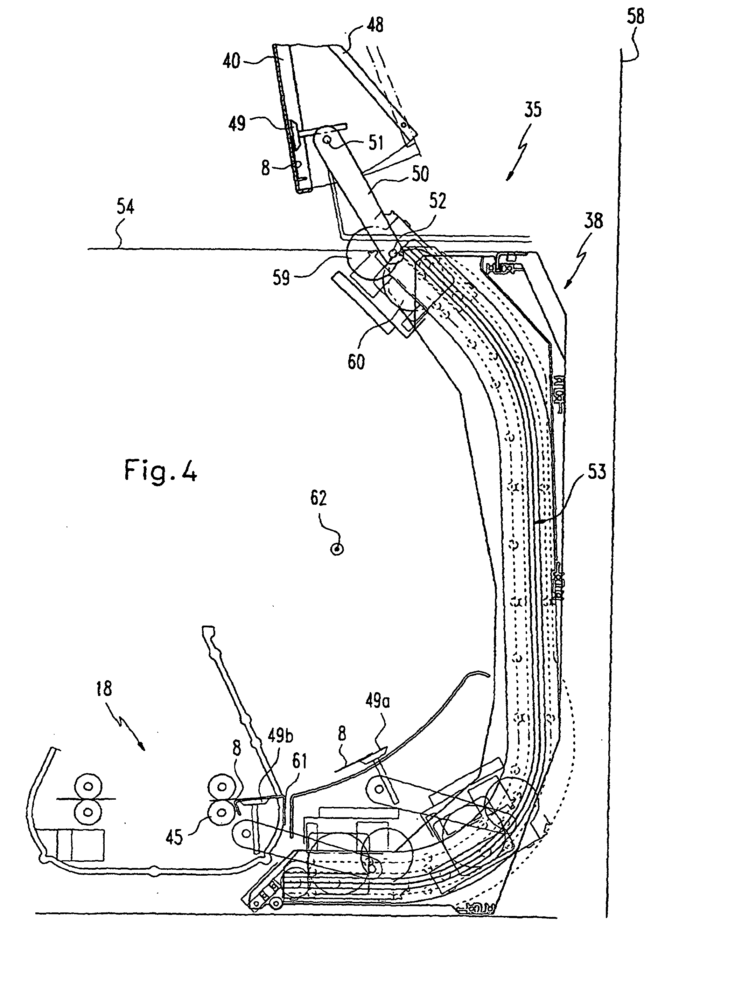

Fig. 4 zeigt Details der Entnahmestation 38. Sie ist gehäusefest montiert, d. h. mechanisch getrennt von der Übergabestation 35, welche drehbar im Gehäuse 58 des Geräts 4 gelagert ist. Die Trennung ist schematisch durch die Trennlinie 54 dargestellt. Die Entnahmestation 38 wirkt aber gleichwohl mit der Übergabestation 35 zusammen. Sie entnimmt aus einer geöffneten Röntgenkassette 40 mittels eines mit Unterdruck betriebenen Saugers 49 eine Bildplatte 8 aus der Kassette 40. Von dieser ist der geöffnete Kassettendeckel 48 schematisch gezeigt. Der Sauger 49 ist über einen Hebelarm 50 mit einem gesteuerten Antrieb verbunden. Er ist mittels Drehscheiben 59, 60 um die Achsen 51 und 52 drehbar gelagert. Ein einziger Antriebsmotor wirkt auf beide Drehscheiben. Verschiedene Komponenten des Antriebs sind durch die mit 53 bezeichneten Führungslinien durch geeignete Zwangsführungsmittel zwangsgeführt. Zur Übergabe der entnommenen Bildplatte 8 an ein Führungsblech 61 und an das Transportwalzenpaar 45 befindet sich der Sauger 49 in der Position 49b. Mit 49a ist eine Position dargestellt, die der Sauger während des Transportvorgangs von der Kassette 40 zum Transportwalzenpaar 45 einnimt. Von der Position 49 zur Position 49b wird die Bildplatte 8 durch die Zwangsführung und die Drehscheiben 59, 60 um etwa 120° um eine horizontale, bezüglich der Zeichenebene senkrechte Achse 62 gedreht.

Die Eingabe-Einheit 39 ist funktionell im wesentlichen identisch, geometrisch aber spiegelbildlich zur Entnahmeeinheit 38 aufgebaut. Zur Eingabe in die Rönt genkassette kann es sich als nötig erweisen, kleinere Details anders zu gestalten, beispielsweise die den Führungslinien 53 entsprechenden Linien bzw. die entsprechenden Zwangsführungsmittel anders zu gestalten. Beispielsweise können S-förmige Führungslinien vorgesehen sein.

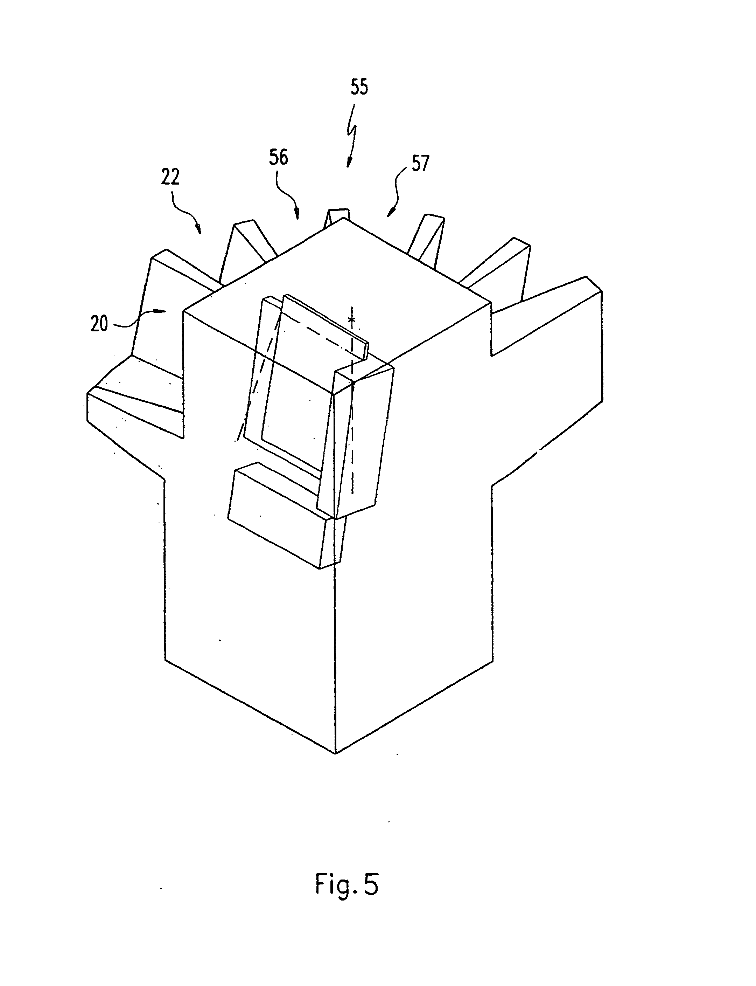

Es wurden Ausführungsbeispiele der Erfindung beschrieben. Dabei ist klar, daß im Rahmen des fachmännischen Könnens jederzeit neue Varianten entstehen können. Beispielsweise ist in Fig. 5 gezeigt, wie mit dem Konzept der drehbaren Übergabestation jederzeit eine Sorter-Funktion eingeführt werden kann. Die Ausgabestation 22 wird dabei um beliebig viele Nebenstationen 56, 57 erweitert, so daß ein ausgabeseitiger Sorter 55 entsteht. Durch-entsprechende Steuerungsmittel, die beispielsweise über den Datenspeicher auf den Röntgenkassetten mit Daten versorgt werden können, kann dann ausgabeseitig die Röntgenkassette in eines der Fächer 56, 57 etc. sortiert ausgegeben werden. Solche Sortierkriterien können beispielsweise bestimmte Behandlungsstationen (innere Medizin, Unfallchirurgie) eines Krankenhauses sein.

Es besteht auch die Möglichkeit, nur eine zusätzliche Ausgabestation so vorzusehen, daß beide Ausgabestationen gegenüberliegend angeordnet sind. Auf diese Weise kann zumindest ein kleiner Sorter realisiert werden, ohne einen Zeitverlust in Kauf nehmen zu müssen. Die beladene Kassette kann ohne weitere Drehung der Übergabestation in die dem Format zugeordnete Ausgabestation transportiert werden.

## Patentansprüche

1. Verfahren zur Verarbeitung einer fotostimulierbaren Bildplatte (8), wobei die Bildplatte (8) aus einer Kassette (1, 40) entnommen, bearbeitet und anschließend wieder in derselben Kassette (1, 40) abgelegt wird und wobei die Kassette (1, 40) von einer Eingabestation (20) zu einer Ausgabestation (22) transportiert wird, **dadurch gekennzeichnet, daß** die Kassette (1, 40) zwischen der Entnahme der Bildplatte (8) aus der Kassette (1, 40) und der Ablage der Bildplatte (8) in derselben Kassette (1, 40) um eine Achse (36) gedreht wird, die vertikal ist bezüglich der Ebene, die von den Transportrichtungen (I, K) der Kassetten (1, 40) aufgespannt wird, wobei I die Transportrichtung der Kassetten (1, 40) von der Eingabe- (20) zu einer Übergabestation (35) und K die Transportrichtung von der Übergabe- (35) zur Ausgabestation (22) bezeichnet.

2. Verfahren nach Anspruch 1, **dadurch gekennzeichnet, daß** die Kassette (1, 40) in einer im wesentlichen vertikalen Orientierung transportiert wird.

3. Verfahren nach Anspruch 1, **dadurch gekennzeichnet, daß** die Kassette (1, 40) um 180° gedreht wird.

4. Verfahren nach Anspruch 1, **dadurch gekennzeichnet, daß** die Kassette (1, 40) von der Eingabestation (20) horizontal in einer ersten Richtung (D, I) zu einer Übergabestation (35) transportiert und dort geöffnet wird, daß die Bildplatte (8) aus der Kassette (1, 40) entnommen, anschließend die Kassette (1, 40) gedreht und die Bildplatte (8) optoelektronisch abgetastet in der Kassette (1, 40) abgelegt, die Kassette (1, 40) geschlossen und entgegengesetzt zu der ersten Richtung in die Ausgabestation (22) transportiert wird.

5. Vorrichtung zur Verarbeitung einer fotostimulierbaren Bildplatte (8) mit einer Eingabestation (20) zur Eingabe von Kassetten (1, 40), die die Bildplatte (8) enthalten, einer Ausgabestation (22) zur Entnahme der Kassetten (1, 40) und einer Übergabestation (35) zur Übergabe der Bildplatte (8) aus der Kassette (1, 40) an eine Transporteinheit und zur Übergabe der Bildplatte (8) von der Transporteinheit an dieselbe Kassette (1, 40), **dadurch gekennzeichnet, daß** die Übergabestation (35) dergestalt um eine Achse drehbar ist, die vertikal ist bezüglich der Ebene, die von den Transportrichtungen (I, K) der Kassetten (1, 40) aufgespannt wird, wobei I die Transportrichtung der Kassetten (1, 40) von der Eingabe- (20) zur Übergabestation (35) und K die Transportrichtung von der Übergabestation (35) zur Ausgabestation (22) bezeichnet, daß die Kassette (1, 40) zwischen der Entnahme der Bildplatte (8) und der Ablage der Bildplatte (8) in derselben Kassette (1, 40) um diese vertikale Achse (36) gedreht wird.

6. Vorrichtung nach Anspruch 5, **dadurch gekennzeichnet, daß** die Kassette (1, 40) in einer im wesentlichen vertikalen Orientierung transportierbar ist.

7. Vorrichtung nach Anspruch 5, **dadurch gekennzeichnet, daß** eine Entnahmeeinheit (38) zur Entnahme der Bildplatte (8) aus der Kassette (1, 40) und eine Ablageeinheit zur Ablage der Bildplatte (8) in derselben Kassette vorgesehen sind.

8. Vorrichtung nach Anspruch 5, **dadurch gekennzeichnet, daß** eine Auslesestation (18) für die Bildplatte (8) vorgesehen ist.

9. Vorrichtung nach Anspruch 5, **dadurch gekennzeichnet, daß** die Eingabe-(20) und Ausgabestation (22) unmittelbar nebeneinander angeordnet sind.

10. Vorrichtung nach Anspruch 5, **dadurch gekennzeichnet, daß** mehrere Ausgabestationen (22, 56, 57) vorgesehen sind.

11. Vorrichtung nach Anspruch 10, **gekennzeichnet durch** eine Steuerung, die Daten von der Kassette (1, 40) liest und die Kassette (1, 40) den Daten entsprechend einer bestimmten Ausgabestation (22, 56, 57) zuführt.

12. Vorrichtung nach einem der vorhergehenden Ansprüche, **dadurch gekennzeichnet, daß** die Eingabestation (20) und die Ausgabestation (22) um parallele Achsen schwenkbar an einem gemeinsamen Gehäuseteil gelagert sind.

## Claims

1. Method for processing a photo-stimulatable videodisk (8), wherein the videodisk (8) is removed from a cassette (1, 40), edited and then filed in the same cassette (1, 40) again and wherein the cassette (1, 40) is conveyed from an input station (20) to an output station (22), **characterised in that** between removal of the videodisk (8) from the cassette (1, 40) and filing the videodisk (8) in the same cassette (1, 40) the cassette (1, 40) is rotated about an axis (36) which is vertical in respect of the plane spanned by the conveying directions (I, K) of the cassettes (1, 40), I designating the conveying direction of the cassettes (1, 40) from the input station (20) to a delivery station (35) and K the conveying direction from the delivery station (35) to the output station (22).

2. Method according to claim 1, **characterised in that** the cassette (1, 40) is conveyed in a substantially vertical orientation.

3. Method according to claim 1, **characterised in that** the cassette (1, 40) is rotated about 180°.

4. Method according to claim 1, **characterised in that** the cassette (1, 40) is conveyed from the input station (20) horizontally in a first direction (D, I) to a delivery station (35) and there opened, the videodisk (8) is removed from the cassette (1, 40), then the cassette (1, 40) is rotated and the videodisk (8), having been optoelectronically scanned, is filed in the cassette (1, 40), the cassette (1, 40) is closed and conveyed into the output station (22) in the opposite direction to the first direction.

5. Device for processing a photo-stimulatable videodisk (8) with an input station (20) for the input of cassettes (1, 40) containing the videodisk (8), an output station (22) for removing the cassettes (1, 40) and a delivery station (35) for delivering the videodisk (8) from the cassette (1, 40) to a conveying unit and for delivering the videodisk (8) from the delivery unit to the same cassette (1, 40), **characterised in that** the delivery station (35) is rotatable about an axis which is vertical in respect of the plane spanned by the conveying directions (I, K) of the cassettes (1, 40), I designating the conveying direction of the cassettes (1, 40) from the input station (20) to the delivery station (35) and K the conveying direction from the delivery station (35) to the output station (22), in such a way that the cassette (1, 40) is rotated about this vertical axis (36) between removal of the videodisk (8) and filing of the videodisk (8) in the same cassette (1, 40).

6. Device according to claim 5, **characterised in that** the cassette (1, 40) is conveyable in a substantially vertical orientation.

7. Device according to claim 5, **characterised in that** a removal unit (38) for removing the videodisk (8) from the cassette (1, 40) and a filing unit for filing the videodisk (8) in the same cassette are provided.

8. Device according to claim 5, **characterised in that** a reading station (18) for the videodisk (8) is provided.

9. Device according to claim 5, **characterised in that** the input (20) and output (22) stations are arranged immediately next to one another.

10. Device according to claim 5, **characterised in that** several output stations (22, 56, 57) are provided.

11. Device according to claim 10, **characterised by** a control unit which reads data from the cassette (1, 40) and feeds the cassette (1, 40) to a specific output station (22, 56, 57) according to the data.

12. Device according to one of the preceding claims, **characterised in that** the input station (20) and the output station (22) are held on a common housing part as swivellable about parallel axes.

## Revendications

1. Procédé destiné au traitement d'une plaque d'image (8) photostimulable, dans lequel la plaque d'image (8) est retirée d'une cassette (1, 40), traitée, et est ensuite à nouveau déposée dans la même cassette (1, 40), et la cassette (1, 40) étant transportée d'un poste d'insertion (20) vers un poste de sortie (22), **caractérisé en ce que**, entre le retrait de la plaque d'image (8) de la cassette (1, 40) et le rangement de la plaque d'image (8) dans la même cassette (1, 40), la cassette (1, 40) est tournée autour d'un axe (36), qui est vertical par rapport au plan défini par les directions de transport (I, K) des cassettes (1, 40), I désignant la direction de transport des cassettes (1, 40) du poste d'insertion (20) vers un poste de transfert (35), et K désignant la direction de transport du poste de transfert (35) vers le poste de sortie (22).

2. Procédé selon la revendication 1, **caractérisé en ce que** la cassette (1, 40) est transportée dans une orientation sensiblement verticale.

3. Procédé selon la revendication 1, **caractérisé en ce que** la cassette (1, 40) est tournée de 180°.

4. Procédé selon la revendication 1, **caractérisé en ce que**, du poste d'insertion (20), la cassette (1, 40) est transportée horizontalement dans une première direction (D, I) vers un poste de transfert (35), et est ouverte dans ce dernier, la plaque d'image (8) est retirée de la cassette (1, 40), la cassette (1, 40) est ensuite tournée, et la plaque d'image (8) balayée par voie opto-électronique est déposée dans la cassette (1, 40), la cassette (1, 40) étant ensuite fermée et transportée vers le poste de sortie (22) à l'opposé de la première direction.

5. Dispositif destiné au traitement d'une plaque d'image (8) photostimulable, comportant un poste d'insertion (20) pour l'insertion de cassettes (1, 40) contenant la plaque d'image (8), un poste de sortie (22) pour le retrait des cassettes (1, 40), et un poste de transfert (35) pour le transfert de la plaque d'image (8) de la cassette (1, 40) à une unité de transport, et pour le transfert de la plaque d'image (8) de l'unité de transport à la même cassette (1, 40), **caractérisé en ce que** le poste de transfert (35) peut tourner autour d'un axe, qui est vertical par rapport au plan défini par les directions de transport (I, K) des cassettes (1, 40), I désignant la direction de transport des cassettes (1, 40) du poste d'insertion (20) vers le poste de transfert (35), et K désignant la direction de transport du poste de transfert (35) vers le poste de sortie (22), de telle sorte que la cassette (1, 40) soit tournée autour de cet axe vertical (36) entre le retrait de la plaque d'image (8) et le rangement de la plaque d'image (8) dans la même cassette (1, 40).

6. Dispositif selon la revendication 5, **caractérisé en ce que** la cassette (1, 40) peut être transportée dans une orientation sensiblement verticale.

7. Dispositif selon la revendication 5, **caractérisé en ce qu'**il est prévu une unité de retrait (38) pour le retrait de la plaque d'image (8) de la cassette (1, 40), et une unité de rangement pour le rangement de la plaque d'image (8) dans la même cassette.

8. Dispositif selon la revendication 5, **caractérisé en ce qu'**il est prévu un poste de lecture (18) pour la plaque d'image (8).

9. Dispositif selon la revendication 5, **caractérisé en ce que** le poste d'insertion (20) et le poste de sortie (22) sont disposés directement l'un à côté de l'autre.

10. Dispositif selon la revendication 5, **caractérisé en ce qu'**il est prévu plusieurs postes de sortie (22, 56, 57).

11. Dispositif selon la revendication 10, **caractérisé par** une commande qui lit des données la cassette (1, 40), et qui, en fonction des données, amène la cassette (1, 40) vers un poste de sortie déterminé (22, 56, 57).

12. Dispositif selon l'une quelconque des revendications précédentes, **caractérisé en ce que** le poste d'insertion (20) et le poste de sortie (22) sont montés sur un élément de boîtier commun de façon à pouvoir pivoter autour d'axes parallèles.
